## Europäisches Patentamt

## European Patent Office

## Office européen des brevets

(19)

(11) Publication number: **0 098 859**
**B1**

(12)

# EUROPEAN PATENT SPECIFICATION

(45) Date of publication of patent specification: **13.05.87**

(51) Int. Cl.⁴: **F 16 B 15/00**

(21) Application number: **83900444.7**

(22) Date of filing: **18.01.83**

(86) International application number:
**PCT/SE83/00008**

(87) International publication number:
**WO 83/02648 04.08.83 Gazette 83/18**

(54) **FASTENING DEVICE FOR USE WITH LIGHTWEIGHT CONCRETE AND LIKE MATERIAL.**

(30) Priority: **21.01.82 SE 8200332**

(43) Date of publication of application:
**25.01.84 Bulletin 84/04**

(45) Publication of the grant of the patent:
**13.05.87 Bulletin 87/20**

(84) Designated Contracting States:
**AT BE CH DE FR GB LI NL SE**

(56) References cited:
**WO-A-81/02450**
**DE-A-2 932 846**
**DE-B-2 520 115**
**DE-U-7 636 399**
**SE-C- 156 579**

(73) Proprietor: **TELEFONAKTIEBOLAGET L M ERICSSON**
**S-126 25 Stockholm (SE)**

(72) Inventor: **LINDELL, Jan Anders**
**Rosendal**
**S-610 50 Jönaker (SE)**

(74) Representative: **Baumbach, Thorkild**
**Telefonaktiebolaget L M Ericsson Patent Department**
**S-126 25 Stockholm (SE)**

Courier Press, Leamington Spa, England.

## Description

### Technical Field

The present invention relates to a fastening device for use with light-weight concrete and other porous material, and it includes a substantially tubular part, which is partially slit up longitudinally from a forward insertion end, such that at least two limbs are formed, and with a rearward end provided with means for coaction with a screw or the like, there also being an expansion part disposed in the tabular part for expanding the latter.

### Background Art

When used in low-density lightweight concrete and other porous materials with similar properties, the fastening means known in the art for this purpose do not have pull-out characteristics corresponding to highly demanding service. A typical fastening device of the known type is disclosed in DE—U—7 636 399, which fastening device is expandable after it has been placed butt against the bottom of a drilled hole in a building element. Said fastening device comprises a cylindrical outer part with an axial center hole with an against the slotted insertion end decreasing diameter, into which centre hole an expansion part in the form of a conical plunger is drivable. Fastening devices of said type are very seldom expandable to more than 1,5 times the diameter of the outer part. This depends upon the fact that the increase in the outer diameter is determined by the addition of the diameter caused by the expansion part or plunger when driven against the insertion end, said plunger diameter for practical reasons always being substantially smaller than the diameter of the outer part. The degree of expansion which is obtainable with the known type of fastening devices is too small to ensure a sufficient resistance to withdrawal in lightweight concrete.

In connections intended for withstanding large stresses, it has been found necessary to take the fastening means straight through the lightweight concrete and to anchor them on the rear side thereof. Alternatively, the choice has been to select other concrete qualities with better strength properties, but with poorer heat insulation ability and greater weight as a result. Many known fastening devices are made such that they are deformed to some extent when they are mounted in lightweight concrete, but the deformation is generally not greater than that the device more or less is restored to its original shape, when subjected to large pull-out forces, thus permitting its withdrawal from the lightweight concrete through the same hole or slot it has made itself.

### Disclosure of Invention

The present invention has the object of eliminating the above-mentioned problems, by providing a cheap and reliable fastening device, with an expansion suited for the properties of lightweight concrete and which is retained even when the fastening device is subjected to pull-out stresses. What hereby characterizes the invention will be seen from the following claims.

### Brief Description of Drawings

A preferred embodiment of the invention will now be described with reference to the appended drawings, whereon

Figure 1 is a side view of a fastening device,

Figure 2 illustrates the same device in cross-section,

Figure 3 is a perspective view of an expansion part,

Figure 4 is a perspective view of an expanded fastening device and

Figure 5 illustrates an example of a means intended to increase the capacity of the device to take up transverse forces.

### Best Mode for Carrying Out the Invention

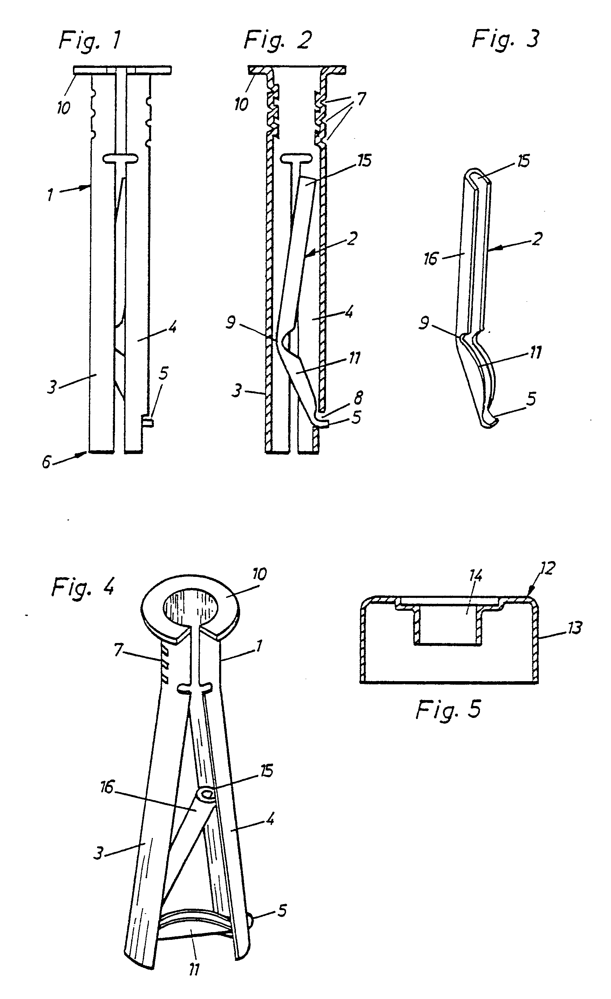

The fastening device illustrated in Figures 1 and 2 comprises a tubular part 1, produced by rolling a plate into a tubular shape. From a forward insertion end 6, the tubular part is longitudinally bifurcated to form two limbs 3 and 4. Inside the tubular part 1 there is disposed an expansion part 2, seen in perspective in Figure 3. This part comprises an elongate plate, folded such that it is given a substantially U-shaped cross-section. In its lower portion the expansion part is formed with a tongue 5, intended for interfering coaction with a hole 8, disposed above an inward bend in the limb 4, adjacent the insertion end. There is a weakened zone or bending notch 9, separating the expansion part into first and second respective elongate portions 11 and 16, the part being slightly bent at said weakened zone. The latter functions, together with the tongue 5 accommodated in the hole 8, as a hinge on expansion of the device.

At its rearward end, the tubular part 1 is provided with a collar 10, and with means 7 intended for coaction with a screw or the like. In the illustrated embodiment, this means comprises a plurality of diametrically opposing impressions forming an internal thread suited to a coach screw or the like.

For use in low-density lightweight concrete, the device may be driven into the material without preparatory drilling. When the collar 10 is flush with the concrete surface, the device is expanded by the end 15 of the expansion part being pressed or knocked into the device, to bend along the binding notch 9, while the first elongate portion 11 of said part is caused to fill a position substantially across the tubular part, the limbs 3 and 4 being forced apart, as illustrated in Figure 4. The portion 16 of the expansion part will thus fill a position with the end 15 against the limb 4, thus preventing the return of the expansion part to its initial situation. The expansion part may be pressed home with the aid of a screw or other means coacting with the means 7. The expansion part may also be driven into the device with the aid of a punch implemented such that the expansion part cannot be driven past the position of maximum expansion of the limbs 3 and 4. A supporting washer, or the like support, is placed under the collar 10 of the device on driving in the expansion part, to prevent the whole device from sinking into the concrete.

Figure 5 is a cross-section of a suitable implementation of a supporting washer for the case where the device is intended to take up transverse forces. The washer 12, having a central impression complementary to the collar 10, has been given a dished shape by pressing down the edge portion 13. This portion is intended for driving into the lightweight concrete to increase the bearing area of the device for transverse forces. As illustrated in the Figure, the hole edges of the washer may be suitable drawn down into a locating sleeve 14, for facilitating correct assembly of the device with said washer.

When the limbs of the device are expanded in the lightweight concrete, the original cellular structure of the material is crushed, and along the entire length of the outside of both limbs there is formed a cushion of crushed, compressed and partially sintered-together cell material. This cushion formation results in that the supporting interface between the compressed material surrounding the device and the cellularly structured lightweight concrete will be considerably greater than the pull-out area of the device itself. This in turn results in that the device offers large initial resistance to withdrawal up to twice that of a flat washer having an area corresponding to the projected area of the expanded device.

A further advantage of the cushion formation is that the device sits solidly in the concrete when unloaded, and also for normal loads, i.e. such as do not result in pulling out. Many known types of fasteners for lightweight concrete are surrounded by such having its original cellular structure. When the fastener is loaded this structure is crushed with the formation of load distributing cushions in the direction of withdrawal, but this first occurs in conjunction with a certain amount of withdrawal of the fastener, which thereby does not sit solidly in the concrete. If the load on the fastener is intermittent, there is a risk of the fastener coming loose altogether, a little at a time, and this risk is entirely eliminated in the fastening device in accordance with the present invention. The increased initial resistance to withdrawal, which is achieved by the cushion formation, reaches an optimum at a certain degree of expansion, which is dependent on the proportions of the fastening device. In this manner the length of the limbs 3 and 4 ought to be between 5 to 10 times the diameter of the tubular part 1. It is a special advantage if the length of the limbs is between 6 to 8 times said diameter. In order to achieve an optimal initial resistance to withdrawal it is furthermore required that the insertion end is expanded to a transverse dimension of 2 to 3 times the diameter of the tubular part. When the length of the limbs is 6 to 8 times said diameter it is a special advantage if the insertion end is expanded to a transverse dimension of 2,1—2,5 times said diameter.

## Claims

1. Fastening device for use with lightweight concrete and other porous material, comprising a substantially tubular part (11) partially slit up longitudinally from a forward insertion end (6), such that at least two limbs (3 and 4) are formed, said part having a rearward end provided with means (7) for coaction with a screw or the like and a collar (10) intended to prevent the device from sinking into the concrete during an expansion instant, as well as an expansion part disposed in said tubular part (2) for the expansion thereof, which fastening device when used, in a first step is driven into the material until the collar (10) is flush with the concrete or material surface and in a second step is caused to expand by the expansion part being pressed or knocked into the device, characterized in that the expansion part (2) includes at least one elongated portion (11) which has one end (5) formed for coaction with a means (8) at the end of one of the limbs (3 and 4) engaging said one end (5) such that a pivot is formed, about which when acted on by a force the elongated portion (11) is turned to a position where it acts for expansion of the tubular part by forcing the limbs (3 and 4) apart and locking them at the insertion end (6) in a position in which the greatest transverse dimension of said end (6) is at least twice the diameter of said tubular part in an unexpanded state.

2. Device as claimed in claim 1, characterized in that the length of the limbs (3 and 4) is between 5 to 10 times the diameter of the tubular part.

3. Device as claimed in claim 1, characterized in that the length of the limbs (3 and 4) is between 6 to 8 times the diameter of the tubular part and in that the insertion end when expanded has a transverse dimension, which is 2,1 to 2,5 times the diameter of the tubular part.

4. Device as claimed in claims 1—3, characterized in that the expansion part (2) includes first and second elongate portions (11 and 16), said portions having mutual angular attitude and being separated by a weakened zone or bending line (9) as well as being disposed such that the application of force on said first elongate portion (11) required for expansion takes place via said second elongate portion (16).

5. Fastening device as claimed in claim 4, characterized in that the second elongate portion (16) of said expansion part is caused to assume a position, after expansion of said device, such that its free end (15) engages against, or is adjacent to, the limb (4) in which said means (8) is disposed.

### Patentansprüche

1. Befestigungsvorrichtung für die Verwendung bei Leichtbeton oder anderen porösen Materialien mit einem im wesentlichen rohrförmigen Teil (1), das von einem vorderen Einsetzende (6) in Längsrichtung teilweise ausgeschlitzt ist, so daß zumindest zwei Glieder (3) und (4) ausgebildet sind, wobei das Teil ein rückwärtiges Ende, das mit Mitteln (7) zum Zusammenwirken mit einer Schraube oder dergleichen versehen ist, und einem Kragen (10) aufweist, der dazu bestimmt ist, ein Einsinken der Vorrichtung in den Beton zu verhindern, während eine Expansion vorgenommen wird, mit einem im rohrförmigen Teil (1) befindlichen Expansionsteil (2) zum Expandieren des rohrförmigen Teils (1), wobei die Befestigungsvorrichtung beim Gebrauch entsprechend einem ersten Schritt in das Material getrieben wird, bis der Kragen (10) mit der Betonoberfläche oder der Oberfläche des entsprechenden anderen Materials fluchtet, und in einem zweiten Schritt durch das in die Vorrichtung gepreßte oder geschlagene Expansionsteil expandiert wird, dadurch gekennzeichnet, daß das Expansionsteil (2) zumindest einen länglichen Abschnitt (11) mit einem Ende (5) umfaßt, welches Ende so ausgebildet ist, daß es mit einem Mittel (8) am Ende eines der Glieder (3, 4) zusammenwirkt, wobei dieses Mittel mit dem einen Ende (5) so im Eingriff steht, daß eine Drehstelle gebildet ist, um die der längliche Abschnitt (11) bei Aufbringung einer Kraft in eine Stellung gedreht wird, in der dieser hinsichtlich einer Expansion des rohrförmigen Teils durch Auseinanderdrücken der Glieder (3, 4) und einer Verriegelung derselben am Einsetzende (66) in einer Position wirksam, ist, in der die größte Querdimension des genannten Endes (6) zumindest zum Zweifachen des Durchmessers des rohrförmigen Teils im nichtexpandierten Zustand entspricht.

2. Vorrichtung nach Anspruch 1, dadurch gekennzeichnet, daß die Glieder (3, 4) zwischen dem 5- bis 10-Fachen des Durchmessers des rohrförmigen Teils entspricht.

3. Vorrichtung nach Anspruch 1, dadurch gekennzeichnet, daß die Länge der Glider (3,4) zwischen dem 6- bis 8-Fachen des Durchmessers des rohrförmigen Teils entspricht, und daß das Einsetzende im expandierten Zustand eine Querdimension hat, die dem 2,1- bis 2,5-Fachen des Durchmessers des rohrförmigen Teils entspricht.

4. Vorrichtung nach den Ansprüchen 1 bis 3, dadurch gekennzeichnet, daß das Expansionsteil (2) einen ersten und zweiten länglichen Abschnitt (11) und (16) umfaßt, daß die Abschnitte eine gegenseitige Winkellage einnehmen und durch eine geschwächte Zone oder Bieglinie (9) getrennt und ebenso so angeordnet sind, daß die Aufbringung einer Kraft auf den ersten länglichen Abschnitt (11) erforderlich ist, damit über den zweiten länglichen Abschnitt (16) eine Expansion stattfindet.

5. Befestigungsvorrichtung nach Anspruch 4, dadurch gekennzeichnet, daß der zweite längliche Abschnitt (16) des Expansionsteils dazu veranlaßt wird, nach der Expansion der Vorrichtung eine solche Position einzunehmen, daß dessen freies Ende (15) gegen das Glied (4) stößt oder in der Nähe desselben liegt, in dem sich das Mittel (8) befindet.

**Revendications**

1. Dispositif de fixation à utiliser avec du béton léger et autre matériau poreux, comprenant une pièce sensiblement tubulaire (1) partiellement fendue longitudinalement à partir d'une extrémité avant (6) d'insertion, de manière qu'au moins deux branches (3 et 4) soient formées, ladite pièce ayant une extrémité arrière équipée de moyens (7) destinés à coopérer avec une vis ou analogue et une collerette (10) destinée à empêcher le dispositif de s'enfoncer dans le béton pendant un temps d'expansion, ainsi qu'une pièce d'expansion disposée dans ladite pièce tubulaire (2) pour provoquer son expansion, lequel dispositif de fixation, lorsqu'il est utilisé, dans une première étape, est enfoncé dans le matériau jusqu'à ce que la collerette (10) affleure la surface, du béton ou du matériau et, dans une seconde étape, est amené à s'expanser sous l'effet de la pièce d'expansion qui est poussée ou enfoncée dans le dispositif, caractérisé en ce que la pièce d'expansion (2) comprend au moins une partie allongée (11) dont une première extrémité (5) est formée de façon à coopérer avec des moyens (8) situés à l'extrémité de l'une des branches (3 et 4) et portant contre ladite extrémité (5) afin qu'il soit formé un pivot autour duquel, sous l'effet d'une force, la partie allongée (11) tourne vers une position dans laquelle elle agit de façon à expanser la pièce tubulaire en écartant à force les branches (3 et 4) et en les bloquant, à l'extrémité d'insertion (6), dans une position dans laquelle la plus grande dimension transversale de ladite extrémité (6) est égale au moins au double du diamètre de ladite pièce tubulaire dans un état non expansé.

2. Dispositif selon la revendication 1, caractérisé en ce que la longueur des branches (3 et 4) est comprise entre 5 et 10 fois le diamètre de la pièce tubulaire.

3. Dispositif selon la revendication 1, caractérisé en ce que la longueur des branches (3 et 4) est comprise entre 6 et 8 fois le diamètre de la pièce tubulaire et en ce que l'extrémité d'insertion, lorsqu'elle est expansée, présente une dimension transversale qui est de 2,1 à 2,5 fois le diamètre de la pièce tubulaire.

4. Dispositif selon les revendication 1—3, caractérisé en ce que la pièce d'expansion (2) comprend des première et seconde parties allongées (11 et 16), lesdites parties ayant une attitude angulaire mutuelle et étant séparées par une zone affaiblie ou ligne (9) de pliage, et étant aussi disposés de façon que l'application d'une force à ladite première partie allongée (11), demandée pour une expansion, s'effectue par l'intermédiaire de ladite seconde partie allongée (16).

5. Dispositif de fixation selon la revendication 4, caractérisé en ce que la seconde partie allongée (16) de ladite pièce d'expansion est amenée à prendre une position, après l'expansion dudit dispositif, telle que son extrémité libre (15) porte contre, ou soit adjacente à, la branche (4) dans laquelle lesdits moyens (8) sont disposés.

Fig. 1

Fig. 2

Fig. 3

Fig. 4

Fig. 5